(19) Europäisches Patentamt
European Patent Office
Office européen des brevets

(11) EP 0 618 936 B1

# (12) FASCICULE DE BREVET EUROPEEN

(45) Date de publication et mention de la délivrance du brevet:
**05.02.1997 Bulletin 1997/06**

(21) Numéro de dépôt: **93911667.9**

(22) Date de dépôt: **21.12.1992**

(51) Int Cl.[6]: **C08G 73/14**

(86) Numéro de dépôt international:
**PCT/FR92/01218**

(87) Numéro de publication internationale:
**WO 93/13158 (08.07.1993 Gazette 1993/16)**

## (54) SOLUTIONS DE POLYAMIDES-IMIDES DANS LA GAMMA-BUTYROLACTONE ET LEUR PROCEDE D'OBTENTION

LÖSUNGEN VON POLYAMIDIMIDEN IN GAMMA-BUTRYROLACTON UND DEREN HERSTELLUNGSVERFAHREN

SOLUTIONS OF POLYAMIDE IMIDES IN GAMMA-BUTYROLACTONE AND A METHOD FOR PREPARING SAME

(84) Etats contractants désignés:
**BE DE ES FR GB IT NL**

(30) Priorité: **24.12.1991 FR 9116338**

(43) Date de publication de la demande:
**12.10.1994 Bulletin 1994/41**

(73) Titulaire: **RHONE-POULENC FIBRES
69003 Lyon (FR)**

(72) Inventeurs:
- **Michaud, Philippe
Mobile, AL 36695 (US)**
- **RUSSO, Jean
F-69006 Lyon (FR)**

(74) Mandataire: **Esson, Jean-Pierre
RHONE-POULENC CHIMIE,
Direction de la Propriété Industrielle,
Centre de Recherches des Carrières,
BP 62
69192 Saint-Fons Cédex (FR)**

(56) Documents cités:
**EP-A- 0 332 543** **WO-A-92/21711**

- **Patent Abstracts of Japan, vol. 7, no. 273 (C-198)(1418), 6 décembre 1983, & JP-A-58154728**
- **Kirk-Othmer, Encyclopedia of Chemical Technology, 3ième ed., tome 13, page 802, John Wiley & Sons, New York 1981**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne des solutions de polyamides-imides directement filables et conformables dans la y-butyrolactone.

Elle concerne également un procédé pour l'obtention de solutions présentant une coloration améliorée.

Il est déjà connu selon le FR 2 079 785 de préparer des solutions à base de polyamides-imides dans la N-méthylpyrrolidone, mais les solutions et les polymères ainsi obtenus présentent une coloration intense brune limitant les possibilités de coloration ultérieure des articles mis en forme à partir de ces solutions.

Il est également connu, selon le FR 2 627 497 de préparer des solutions directement filables à base de polyamides-imides, par polycondensation dans la y-butyrolactone, puis dilution à température de 120 à 165 °C dans un autre solvant pour obtenir une concentration en polymère de 5 à 30 %, la proportion pondérale entre le solvant de réaction et le solvant de dilution étant comprise entre 40/60 et 80/20. L'utilisation de y-butyrolactone comme solvant de polycondensation des polyamides-imides, même conjointement avec un solvant de dilution du type amide, permet d'améliorer la coloration des solutions de polyamides-imides. Mais de telles solutions ne présentent qu'un intérêt limité, car il est difficile d'éviter totalement la précipitation du polymère au bout de quelques mois.

De plus, l'utilisation d'un cosolvant ne favorise pas la suppression de la coloration et, lors de la transformation ultérieure de ces solutions, la présence simultanée de deux solvants s'avère compliquée et peu économique industriellement.

Il a maintenant été trouvé, et c'est l'objet de la présente invention, qu'il était possible de préparer des solutions de polyamides-imides dans la y-butyrolactone comme unique solvant. Plus particulièrement, elle concerne des solutions limpides de polyamides-imides (PAI) directement filables et conformables contenant :

a) - un polyamide-imide comportant des motifs de récurrence amide-imide de formule :

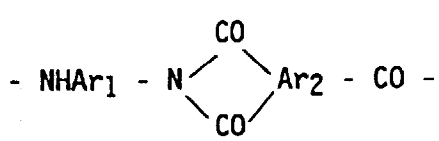

dans lesquels :

- $Ar_1$ représente le radical aromatique divalent tolylène,
- $Ar_2$ représente un radical aromatique trivalent et

b) comme solvant unique, la γ-butyrolactone substantiellement anhydre et exempte d'alcool butylique en quantité suffisante pour permettre la mise en forme des solutions, généralement de 5 à 35 %.

Les solutions selon la présente invention sont pratiquement exemptes de toute coloration indésirable.

La présente invention concerne également un procédé pour l'obtention de solutions limpides directement filables et conformables à base de polyamides-imides, comprenant la réaction, effectuée dans la y-butyrolactone (γ-BL) substantiellement anhydre et exempte d'alcool butylique comme solvant de polycondensation, en proportions sensiblement stoechiométriques, entre :

- du toluylène diisocyanate,
- un anhydride acide aromatique, de préférence l'anhydride trimellique, la concentration en polyamide-imide dans la γ-BL étant d'au moins 27 %, préférentiellement de 27 à 50 % environ, à une température croissante de l'ambiance jusqu'à 200 °C environ,

puis addition de γ-butyrolactone (γ-BL) pour obtenir une concentration permettant la transformation ultérieure.

Généralement, la concentration finale en PAI convenable pour le filage ou le filmage est comprise entre 5 et 30 %.

La γ-butyrolactone utilisée doit être substantiellement anhydre, c'est-à-dire doit contenir moins de 500 ppm d'eau ; elle doit également être exempte d'alcool butylique, c'est-à-dire contenir moins de 500 ppm d'alcool butylique, pour éviter toute réaction secondaire.

Le toluène diisocyanate (TDI) généralement utilisé est le TDI commercial qui se présente sous la forme de mélange de TDI-2,4 et TDI-2,6 à raison d'au moins 60 % de TDI-2,4, de préférence 80 % de TDI-2,4 et 20 % de TDI-2,6.

Eventuellement on peut ajouter au TDI, une proportion mineure d'un autre diisocyanate aromatique, pour améliorer certaines propriétés des articles conformés obtenus.

Comme anhydride acide, l'anhydride trimellique sera utilisé préférentiellement.

Par contre, contrairement à l'enseignement des FR 2 079 785 et FR 2 627 497, les polyamides-imides selon la présente invention ne doivent pas contenir plus de 5 % d'unités issues d'autres diacides aromatiques tels que l'acide téréphtalique ou le dicarboxybenzène sulfonate de métal alcalin ou alcalino-terreux, pour éviter que le polymère ne précipite.

En effet, comme on le verra ci-après dans les exemples, la présence de tels composés à raison de 20 moles % conduit à la précipitation du PAI obtenu dans la y-BL, à température ambiante, de sorte que de telles solutions ne sont ni stockables ni directement conformables industriellement.

De même, l'utilisation de certains diisocyanates autres que le TDI, par exemple le diphényléther-4,4' diisocyanate et le diphényl-méthyl-4,4' diisocyanate conduit à des précipitations rendant de telles solutions inutilisables industriellement.

La réaction de polycondensation a lieu à température croissante entre la température ambiante et 200 °C, de préférence entre 100 et 200 °C pendant au moins trois heures, avec une concentration en polyamide-imide comprise entre 27 et 50 %, de préférence 30 et 35 %. La concentration en PAI est ensuite ajustée à la valeur désirée, généralement à la température de polycondensation. Mais l'ajustement de la concentration peut aussi être réalisé à plus basse température, ultérieurement, les solutions ainsi obtenues restant limpides et homogènes quelle que soit la température, y compris la température ambiante, de sorte que de telles solutions sont stockables à température ambiante sans s'altérer ; elles ne présentent ni précipitation, ni évolution ultérieure sensible de la viscosité.

De telles solutions présentent également l'avantage d'être peu colorées.

Les solutions selon l'invention peuvent être obtenues en discontinu ou en continu au moyen de tout appareil approprié.

Les solutions selon l'invention sont conformables, en particulier filables par les procédés de filage humide ou à sec bien connus de l'homme de métier. Les fils et fibres ainsi obtenus possèdent l'avantage d'être très faiblement colorés.

Dans les essais qui suivent les valeurs de Mn et Mw sont déterminées par chromatographie d'exclusion sur gel (GPC) dans la N-méthylpyrrolidone à 80 °C et 0,1 mole/litre de bromure de lithium, les masses étant exprimées par rapport à un étalonnage polystyrène.

L'indice de polydispersité I correspond au rapport $\frac{Mw}{Mn}$.

Les exemples ci-après illustrent la présente invention sans la limiter.

- **<u>EXEMPLE 1</u>** :

- <u>Réactifs :</u>

- solvant de réaction :
  γ-butyrolactone (γ-BL) de marque PROLABO 335,6 g (d = 1,13) 297 ml
- anhydride trimellique (ANTM) 124,8 g ....... 0,65 mole mole
- Toluylène diisocyanate (TDI du commerce : Scuranate® de RP) 113,1 g ....... 0,65 mole mole
- solvant de dilution (γ-BL) 334,2 g (d = 1,13) 304,5 ml

Dans un réacteur agité, muni d'un réfrigérant à reflux, d'une arrivée d'azote, d'un bain d'huile thermostaté et d'une ampoule de coulée pour l'addition des solvants de dilution on introduit les monomères cités ci-dessus et le solvant de réaction dans les proportions indiquées. La température est élevée progressivement de la température ambiante à 198 °C en deux heures environ et on laisse la masse réactionnelle à 198 °C pendant 95 minutes. La concentration est alors de 35 %.

La (γ-BL) de dilution est coulée dans le réacteur pendant 15 minutes et la masse réactionnelle est refroidie progressivement pour être stockée. La concentration est alors de 21 %.

La viscosité de la solution à 25 °C est de 1 147 poises.

La solution est très faiblement colorée.

- **<u>EXEMPLE 2</u>** :

- <u>Réactifs :</u>

- solvant de réaction :
  γ-butyrolactone (γ-BL) de marque PROLABO 334,2 g (d = 1,13) 296 ml
- anhydride trimellique (ANTM) 99,84 g ....... 0,52 mole mole
- acide téréphtalique (AT) 17,26 g ....... 0,104 mole mole
- dicarboxy-3,5 benzène sulfonate de sodium (AISNa) 6,97 g ....... 0,026 mole mole
- Toluylène diisocyanate (TDI du commerce Scuranate® de RP) 113,1 g....... 0,65 mole mole
- solvant de dilution (γ-BL) 342,8 g (d = 1,13) 303 ml

On opère dans l'appareil indiqué ci-dessus et dans les mêmes conditions, excepté la phase de maintien à 198 °C qui est de 130 minutes, pour atteindre une viscosité suffisante.

Le polyamide-imide est totalement soluble lorsque la température de la masse réactionnelle atteint 198 °C.

La (γ-BL) de dilution est ajoutée en continu alors que la température s'abaisse de 198 à 146 °C. Le polymère est encore soluble. Par contre au cours du refroidissement, le polymère précipite totalement et la solution est alors inutilisable industriellement.

- **<u>EXEMPLE 3</u>** :

- <u>Réactifs</u> :

- solvant de réaction :
  γ-butyrolactone (γ-BL) de marque PROLABO 382,8 g (d = 1,13) 339 ml
- anhydride trimellique (ANTM) 76,8 g ....... 0,4 mole mole
- Diphénylméthyl-4,4' diisocyanate (MDI) 113,1 g ....... 0,65 mole mole
- solvant de dilution (γ-BL) 149,9 g (d = 1,13) 132,5 ml

Dans un réacteur agité, muni d'un réfrigérant à reflux, d'une arrivée d'azote, d'un bain d'huile thermostaté et d'une ampoule de coulée pour l'addition des solvants de dilution on introduit les monomères cités ci-dessus et le solvant de réaction dans les proportions indiquées.

La température est élevée progressivement de la température ambiante à 198 °C en deux heures environ et on laisse la masse réactionnelle à 198 °C pendant 2 heures.

La (γ-BL) de dilution est coulée dans le réacteur pendant 10 minutes et la masse réactionnelle est refroidie progressivement pour être stockée.

Au bout de quelques heures, la température est redescendue à 22°C et le polymère à totalement précipité.

La solution devient inutilisable industriellement.

## Revendications

1. Solutions limpides de polyamides-imides directement filables et conformables contenant:

   a) un polyamide-imide dont au moins 95 % des motifs de récurrence sont représentés par la formule $-NH-Ar_1-N(CO)_2Ar_2-CO-$ dans lesquels :

   - $A_{r1}$ représente le radical aromatique divalent tolyléne,
   - $Ar_2$ représente un radical trivalent benzène-1,2,4-triyle et

   b) comme solvant unique, la gamma-butyrolactone substantiellement anhydre et exempte d'alcool butylique.

2. Solutions selon la revendication 1, caractérisées par le fait que la concentration finale en polyamideimide est comprise entre 5 et 35 %.

3. Solutions selon la revendication 1, caractérisées par le fait que $Ar_1$ représente un mélange de radicaux tolylène-2,4 et tolylène-2,6 en proportion de 60 % au moins de tolylène-2,4.

4. Solutions selon la revendication 1, caractérisées par le fait que $Ar_2$ représente un radical de formule:

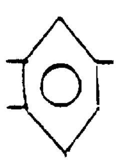

5. Procédé pour l'obtention de solutions limpides selon la revendication 1, caractérisé par le fait que la polycondensation est effectuée dans la γ-butyrolactone (γ-BL) substantiellement anhydre et exempte d'alcool butylique comme solvant de polycondensation, en proportions sensiblement stoechiométriques entre :

   - du toluylène diisocyanate, et
   - un anhydride acide aromatique dont au moins 95 % est l'anhydride trimellique, la concentration en polyamide-imide dans la γ-BL avant dilution étant d'au moins 27 %, puis la dilution est ensuite effectuée avec le même solvant pour obtenir une concentration en polyamide-imide permettant la conformation ultérieure.

6. Procédé selon la revendication 5, caractérisé par le fait que le toluylène diisocyanate se présente sous forme de mélange de toluylène-2,4 et toluylène-2,6 diisocyanate comportant au moins 60 % de toluylène-2,4 diisocyanate.

7. Procédé selon la revendication 5, caractérisé par le fait que l'anhydride acide aromatique utilisé est l'anhydride trimellique.

8. Procédé selon la revendication 5, caractérisé par le fait que la concentration en polyamide-imide avant dilution est comprise entre 27 et 50 %.

9. Procédé selon la revendication 5, caractérisé par le fait que la concentration finale en polyamide-imide est comprise entre 5 et 30 %.

## Patentansprüche

1. Klare Lösungen von direkt verspinnbaren und konformierbaren Polyamid-imiden, enthaltend:

   a) ein Polyamid-imid, von dem mindestens 95 % der wiederkehrenden Einheiten durch die Formel $-NH-Ar_1-N(CO)_2Ar_2-CO-$ dargestellt werden, worin

   - $Ar_1$ den aromatischen divalenten Tolylenrest bedeutet,
   - $Ar_2$ einen trivalenten Rest Benzen-1,2,4-triyl darstellt, und

   b) als einziges Lösungsmittel das im wesentlichen wasserfreie und von Butylalkohol befreite γ-Butyrolacton.

2. Lösungen nach Anspruch 1, dadurch gekennzeichnet, daß die Endkonzentration an Polyamid-imid zwischen 5 und 35 % beträgt.

3. Lösungen nach Anspruch 1, dadurch gekennzeichnet, daß $Ar_1$ eine Mischung der Reste 2,4-Tolylen und 2,6-Tolylen darstellt, mit einem Anteil von mindestens 60 % 2,4-Tolylen.

4. Lösungen nach Anspruch 1, dadurch gekennzeichnet, daß $Ar_2$ einen Rest der Formel

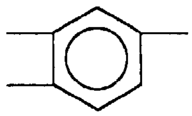

darstellt.

**5.** Verfahren zur Herstellung von klaren Lösungen nach Anspruch 1, dadurch gekennzeichnet, daß die Polykondensation in γ-Butyrolacton (γ-BL), das im wesentlichen wasserfrei und von Butylalkohol befreit ist, als Lösungsmittel der Polykondensation durchgeführt wird, und in etwa stöchiometrischen Verhältnissen von:

- Toluylen-diisocyanat, und
- einem aromatischen Säureanhydrid, von dem mindestens 95 % Trimellitsäureanhydrid ist,

wobei die Konzentration an Polyamid-imid in dem γ-BL vor der Verdünnung mindestens 27 % beträgt, und anschließend die Verdünnung dann mit dem gleichen Lösungsmittel durchgeführt wird, um eine Konzentration an Polyamid-imid zu erhalten, die eine spätere Konformation gestattet.

**6.** Verfahren nach Anspruch 5, dadurch gekennzeichnet, daß das Toluylen-diisocyanat in Form einer Mischung von 2,4-Toluylen-diisocyanat und 2,6-Toluylen-diisocyanat vorliegt, die mindestens 60 % 2,4-Toluylen-diisocyanat umfaßt.

**7.** Verfahren nach Anspruch 5, dadurch gekennzeichnet, daß das verwendete aromatische Säureanhydrid das Trimellitsäureanhydrid ist.

**8.** Verfahren nach Anspruch 5, dadurch gekennzeichnet, daß die Konzentration an Polyamid-imid vor der Verdünnung zwischen 27 % und 50 % liegt.

**9.** Verfahren nach Anspruch 5, dadurch gekennzeichnet, daß die Endkonzentration an Polyamid-imid zwischen 5 % und 30 % liegt.

## Claims

**1.** Clear solutions of polyamideimides which can be directly spun and processed, containing:

a) a polyamideimide in which at least 95 % of the repeat units are denoted by the formula $-NH-Ar_1-N(CO)_2Ar_2-CO-$ in which:

- $Ar_1$ denotes the tolylene divalent aromatic radical,
- $Ar_2$ denotes a 1,2,4-benzenetriyl trivalent radical and

b) as sole solvent, substantially anhydrous gamma-butyrolactone free from butyl alcohol.

**2.** Solutions according to Claim 1, characterized in that the final concentration of polyamideimide is between 5 and 35 %.

**3.** Solutions according to Claim 1, characterized in that $Ar_1$ denotes a mixture of 2,4-tolylene and 2,6-tolylene radicals in a proportion of at least 60 % of 2,4-tolylene.

**4.** Solutions according to Claim 1, characterized in that $Ar_2$ denotes a radical of formula:

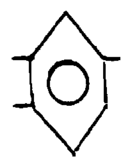

**5.** Process for obtaining clear solutions according to Claim 1, characterized in that the polycondensation is performed in substantially anhydrous γ-butyrolactone (γ-BL) free from butyl alcohol as polycondensation solvent, in substantially stoichiometric proportions, between:

- tolylene diisocyanate, and
- an aromatic acid anhydride of which at least 95 % is trimellitic anhydride, the concentration of polyamideimide in the γ-BL before dilution being at least 27 %, and dilution is then performed with the same solvent to obtain a concentration of polyamideimide permitting the subsequent processing.

**6.** Process according to Claim 5, characterized in that the tolylene diisocyanate is in the form of a mixture of 2,4-tolylene and 2,6-tolylene diisocyanate containing at least 60 % of 2,4-tolylene diisocyanate.

**7.** Process according to Claim 5, characterized in that the aromatic acid anhydride employed is trimellitic anhydride.

**8.** Process according to Claim 5, characterized in that the concentration of polyamideimide before dilution is between 27 and 50 %.

**9.** Process according to Claim 5, characterized in that the final concentration of polyamideimide is between 5 and 30 %.